# EUROPÄISCHE PATENTANMELDUNG

(11) **EP 4 442 427 A1**
(43) Veröffentlichungstag der Anmeldung: **09.10.2024**
(21) Anmeldenummer: 23166338.6
(22) Anmeldetag: 03.04.2023
(51) Int. Cl.: B29C 48/10, B29C 48/90, B29C 48/91, B29C 48/92, B29C 55/28, B29C 48/88, B29C 48/885

(54) **FOLIENBLASANLAGE UND VERFAHREN ZUM REGELN EINER FOLIENBLASANLAGE**

(71) Anmelder: Kdesign GmbH, 53639 Königswinter (DE)
(72) Erfinder: ZIMMERMANN, Richard, 53639 Königswinter (DE); LAMERS, Daniel, 53639 Königswinter (DE)
(74) Vertreter: Neumann Müller Oberwalleney Patentanwälte PartG mbB

(57) **Zusammenfassung**

Folienblasanlage umfassend:
einen Blaskopf (6) zum Ausstoßen eines Folienschlauchs (1) aus Kunststoff,
einen Kühlgasring (10) stromab des Blaskopfs (6), der eine zentrale Öffnung zum Hindurchführen des Folienschlauchs (1) bildet und der zumindest eine innenliegende Austrittsdüse (13) zum Anströmen des Folienschlauchs (1) mit Kühlgas aufweist,
einen Kalibrierkorb (17) stromab des Kühlgasrings (10) mit mehreren Kalibrierelementen (18), die dazu eingerichtet sind, den Folienschlauch (1) zu umschließen und eine Kalibrieröffnung zu bilden, um den Folienschlauch (1) zu führen, wobei die Kalibrierelemente (18) zum Einstellen eines Durchmessers (K) der Kalibrieröffnung verstellbar sind, und
eine Nachtemperiereinheit (20) stromab des Kalibrierkorbs (17) zum Nachtemperieren des Folienschlauchs (1), wobei die Nachtemperiereinheit (20) mehrere Führungselemente (21) aufweist, die dazu eingerichtet sind, den Folienschlauch (1) zu umschließen und eine Führungsöffnung zu bilden, um den Folienschlauch (1) zu führen, wobei die Nachtemperiereinheit (20) einen Rahmen (44) aufweist, an dem die Führungselemente (21) zum Einstellen eines Durchmessers (F) der Führungsöffnung verstellbar angelenkt sind, und wobei die Nachtemperiereinheit (20) mehrere Anblaselemente (22) zum Anblasen des Folienschlauchs (1) mit Temperiergas aufweist, die dazu eingerichtet sind, den Folienschlauch (1) zu umschließen und eine Durchführöffnung für den Folienschlauch (1) zu bilden, wobei die Anblaselemente (22) zum Einstellen eines Durchmessers (D) der Durchführöffnung verstellbar am Rahmen (44) angelenkt sind.

## Beschreibung

Die Erfindung betrifft eine Folienblasanlage mit einem Blaskopf zum Ausstoßen eines Folienschlauchs aus plastifiziertem thermoplastischem Kunststoff in einer Abzugsrichtung entlang einer Längsachse der Folienblasanlage. Ein Kühlgasring ist in Abzugsrichtung stromab des Blaskopfs angeordnet, der eine zentrale Öffnung zum Hindurchführen des Folienschlauchs bildet und der zumindest eine innenliegende Austrittsdüse zum Anströmen des Folienschlauchs mit Kühlgas aufweist. Ferner umfasst die Folienblasanlage einen Kalibrierkorb stromab des Kühlgasrings mit mehreren Kalibrierelementen, die dazu eingerichtet sind, den Folienschlauch zu umschließen und eine Kalibrieröffnung zu bilden, um den Folienschlauch zu führen, wobei die Kalibrierelemente zum Einstellen eines Durchmessers der Kalibrieröffnung verstellbar sind. Stromab des Kalibrierkorbs ist eine Nachtemperiereinheit zum Nachtemperieren des Folienschlauchs angeordnet.

Eine solche Folienblasanlage ist aus der EP 1 491 319 A1 bekannt. Die dort gezeigte Folienblasanlage umfasst stromab des Kalibrierkorbs den Folienschlauch umschließende Gasabsaugmittel mit im Wesentlichen ringförmig angeordneten Absaugdüsen zum Absaugen von monomerhaltigen Ausgasungen. Unmittelbar oberhalb, also stromab, der Gasabsaugmittel ist außerhalb des Folienschlauches eine Nachtemperiereinheit in Form eines weiteren Kühlgasrings angeordnet, der als starrer Ring mit festem unveränderlichem Innendurchmesser zum Hindurchführen des Folienschlauchs ausgebildet ist.

Oberhalb bzw. stromab des weiteren Kühlrings läuft der Folienschlauch in eine Flachlegeeinheit, die den Folienschlauch flach zusammendrückt. Stromab der Flachlegeeinheit wird der Folienschlauch mittels eines Abziehwerks abgezogen. Der flachgedrückte Folienschlauch wird anschließend auf Wickel aufgewickelt.

Der noch relativ warme Folienschlauch kann hierbei vor dem Einlaufen in die Flachlegeeinheit mit dem weiteren Kühlgasring nachgekühlt werden, so dass eine geringere Gefahr eines Verblockens (eines Aneinanderhaftens) der Folienlagen im Abziehwerk besteht, nachdem der Folienschlauch zusammengelegt wurde. Dies führt dazu, dass die Folienlagen zum Aufwickeln auf mehrere Wickel oder bei einer späteren Verarbeitung nicht oder nur schwer voneinander getrennt werden können.

Beim Zuführen des Folienschlauchs in die Flachlegeeinheit und in das Abziehwerk besteht bei bekannten Folienblasanlagen dieser Art die Gefahr, dass der Folienschlauch nicht zentrisch zur Flachlegeeinheit und zum Abziehwerk zugeführt wird. Zudem kann sich diese nicht zentrische Lage des Folienschlauchs währen der Produktion ständig verändern. Dies kann zum Beispiel zu Falten im zusammengelegten Folienschlauch oder einem Kantenversatz führen.

Bei der Extrusion von Folienschläuchen kommt es bei bestimmten Rezepturen und Produkten zu sogenannten Planlage-Fehlern in der produzierten Folie. Solche Planlage-Fehler sind beispielsweise Wellen mit beliebiger Verteilung, Durchhänger im Bereich der Kanten, und sogenannter Bogenlauf.

Derartige Fehler zeigen sich deutlich beim Abrollen der Folie vom fertigen Wickel, und spannungslosen Ausrollen auf dem Boden. Vereinfacht gesagt sind Planlage-Fehler lokale Längenabweichungen einzelner Folienbereiche über die Bahnbreite.

Optisch sind diese Fehler häufig auch bereits in der unter Bahnspannung stehenden Folienbahn auf dem Weg vom Abzug zum Wickler oder innerhalb des Wicklers zu erkennen.

Es sind Messvorrichtungen bekannt, welche die Ebenheit der Bahn in Querrichtung zwischen Leitwalzen auf dem Weg vom Abzug zum Wickler oder im Wickler erfassen. Ferner sind Messvorrichtungen bekannt, welche die geometrische Qualität des sich aufbauenden Wickels erfassen. Damit soll sichergestellt werden, dass eine schlechte Planlage-Güte bereits frühzeitig erkannt wird.

Es werden auch Regelkreise vorgeschlagen, bei denen derartige Messvorrichtungen mit Reckeinrichtungen gekoppelt werden, welche die Planlage durch Erwärmen und Nachrecken des Folienschlauchs nach dem Abzug verbessern sollen.

Im Bereich des noch runden Folienschlauchs sind Heiztunnel-Einrichtungen bekannt, die oberhalb der Einfriergrenze durch im Durchmesser fest angeordnete Infrarot-Heizstrahler den Folienschlauch nochmals erwärmen, um die Planlage-Güte der später flachgelegten Folie zu verbessern. Dabei nutzt man den Effekt, dass ungleiche Spannungsverteilungen durch unterschiedliche Molekülorientierungen am Umfang des Folienschlauchs und resultierende lokale Längenunterschiede durch Nachwärmen wieder abgebaut werden, sodass Planlage-Fehler in der flachgelegten Folie deutlich vermindert oder ganz verhindert werden.

Die ungleichen Spannungsverteilungen entstehen überwiegend durch Fließeffekte in der Extrusionsdüse des Blaskopfs, beispielsweise durch eine nicht optimal zum Rohstoff passende Flusskanalauslegung, durch ein unpassendes Heizprofil der Extrusionsdüse, oder durch eine ungleichmäßige Umfangs-Temperaturverteilung und/oder Umfangs-Mengenverteilung der Schmelze innerhalb und beim Austritt aus der Extrusionsdüse.

Darüber hinaus kann auch ein in der Höhe unpassend zur Einfriergrenze des Folienschlauchs eingestellter Kalibrierkorb, ein zu hoher Anpressdruck (Füllgrad) im Kalibrierkorb oder ein leicht außermittig zur Extrusionsdüse stehender Kalibrierkorb Planlage-Fehler hervorrufen.

In der Flachlegung selbst noch entstehende Planlage-Fehler sind von untergeordneter Bedeutung, wenn der Folienschlauch dort möglichst unbelastet von vorher bereits entstandenen Planlage-Fehlern einläuft.

Nach dem Stand der Technik bekannte Querprofil-Regelsysteme, die korrigierend in die Abkühlung der Blase in der Schlauchbildungszone zwischen Extrusionsdüse und Einfriergrenze eingreifen, können die genannten Probleme zwar deutlich verbessern, aber bei vielen planlage-sensitiven Produkten nicht vollständig verhindern.

Nachteilig ist bei den Heiztunnel-Einrichtungen die starre Anordnung der Heizstrahler, weil üblicherweise eine große Bandbreite unterschiedlicher Blasendurchmesser produziert wird. Der variable Abstand der Folie zum Heiztunnel ist ein zusätzlicher einflussstarker Parameter neben den eigentlichen Produktionsparametern, wodurch der Aufbau automatischer Regelkreise erschwert wird.

Aufgabe der vorliegenden Erfindung ist es, eine Folienblasanlage bereitzustellen, die eine möglichst effektive und variable Nachtemperiereinheit stromab eines Kalibrierkorbs aufweist und eine zentrische Zuführung zu einer Flachlegeeinheit ermöglicht.

Die Aufgabe wird durch eine Folienblasanlage gelöst, die einen Blaskopf zum Aussto-βen eines Folienschlauchs aus plastifiziertem thermoplastischem Kunststoff in einer Abzugsrichtung entlang einer Längsachse der Folienblasanlage, einen Kühlgasring in Abzugsrichtung stromab des Blaskopfs, der eine zentrale Öffnung zum Hindurchführen des Folienschlauchs bildet und der zumindest eine innenliegende Austrittsdüse zum Anströmen des Folienschlauchs mit Kühlgas aufweist, einen Kalibrierkorb stromab des Kühlgasrings mit mehreren Kalibrierelementen, die dazu eingerichtet sind, den Folienschlauch zu umschließen und eine Kalibrieröffnung zu bilden, um den Folienschlauch zu führen, wobei die Kalibrierelemente zum Einstellen eines Durchmessers der Kalibrieröffnung verstellbar sind, und eine Nachtemperiereinheit stromab des Kalibrierkorbs zum Nachtemperieren des Folienschlauchs aufweist. Die Nachtemperiereinheit weist hierbei mehrere Führungselemente auf, die dazu eingerichtet sind, den Folienschlauch zu umschließen und eine Führungsöffnung zu bilden, um den Folienschlauch zu führen, wobei die Nachtemperiereinheit einen Rahmen aufweist, an dem die Führungselemente zum Einstellen eines Durchmessers der Führungsöffnung verstellbar angelenkt sind. Ferner weist die Nachtemperiereinheit mehrere Anblaselemente zum Anblasen des Folienschlauchs mit Temperiergas auf, die dazu eingerichtet sind, den Folienschlauch zu umschließen und eine Durchführöffnung für den Folienschlauch zu bilden, wobei die Anblaselemente zum Einstellen eines Durchmessers der Durchführöffnung verstellbar am Rahmen angelenkt sind.

Als Durchmesser der Kalibrieröffnung, der Führungsöffnung und der Durchführungsöffnung ist jeweils der größtmögliche Durchmesser eines gedachten Kreises innerhalb der verstellbaren Elemente, also der Kalibrierelemente des Kalibrierkorbs sowie der Führungselemente und der Anblaselemente der Nachtemperiereinheit, zu verstehen.

Dadurch, dass die Nachtemperiereinheit sowohl Anblaselemente als auch Führungselemente aufweist, ist gewährleistet, dass der Folienschlauch möglichst zentrisch einer nachgelagerten Einheit, wie zum Beispiel einer Flachlegeeinheit, zugeführt wird. Durch die in eine Einheit zusammengefasste Kombination von Anblaselementen und Führungselementen ist auch eine hohe Anströmgeschwindigkeit des Temperiergases an den Folienschlauch möglich, ohne dass die Lage des Folienschlauchs zu sehr beeinflusst wird oder Vibrationen des Folienschlauchs entstehen würden. Zudem wird ein Touchieren des Folienschlauchs an die Anblaselemente vermieden. Des Weiteren ergibt sich eine geringe Bauhöhe Nachtemperiereinheit aufgrund der Kombination von Anblaselementen und Führungselementen in einer Einheit.

Durch die möglichen hohen Anströmgeschwindigkeiten ist auch die Temperierwirkung erhöht. Insbesondere beim Kühlen des Folienschlauchs wird durch das Anblasen mit Temperiergas mit hoher Anströmgeschwindigkeit ein effizientes Nachkühlen ermöglicht, sodass eine geringere Nachkühlstrecke zur Konvektionskühlung nach dem Kühlgasring erforderlich ist. Je länger nachgekühlt werden muss, umso länger muss die Nachkühlstrecke sein. Dies führt zu entsprechend hoch bauenden Folienblasanlagen. Durch eine effektivere Temperierwirkung beim Kühlen kann die erforderliche Nachkühlstrecke kürzer ausgeführt werden. Die Folienblasanlage weist somit insgesamt einen kompakteren Aufbau und eine geringere Höhe auf.

Zudem wird eine effiziente und variable Nachtemperierung dadurch ermöglicht, dass die Anblaselemente zum Einstellen eines Durchmessers der Durchführöffnung verstellbar am Rahmen angelenkt sind. Hierdurch kann gewährleistet werden, dass die Anblaselemente unabhängig vom Durchmesser des produzierten Folienschlauchs stets einen konstanten Abstand zu diesem aufweisen.

Hierbei kann die Nachtemperiereinheit zudem zum Heizen und/oder Kühlen des Folienschlauchs ausgebildet sein. Hierzu kann die Nachtemperiereinheit eine Kühleinheit zum Kühlen des Temperiergases und/oder eine Heizeinheit zum Heizen des Temperiergases aufweisen. Um ein Aneinanderhaften (Verblocken) der Folie beim Zusammenlegen zu verringern oder zu vermeiden, kann der Folienschlauch nachgekühlt werden. Hierdurch kann die Folienblasanlage mit höherer Leistung, also einer höheren Abzugsgeschwindigkeit des Folienschlauchs betrieben werden ohne Gefahr zu laufen, dass der Folienschlauch zu warm der Flachlegeinheit zugeführt wird und Verblockungsgefahr besteht. Die Ausstoßleistung, das heißt die Menge an produzierter Folie pro Zeit, kann somit gesteigert werden. Ferner lässt sich hierdurch der Einsatz von Additiven im Kunststoffmaterial zur Verringerung der Verblockungsneigung reduzieren oder eventuell sogar vermeiden. Neben einer Kostenersparnis kann sich die Reduktion von Additiven auch positiv auf die Lebensdauer der Schnecke des Extruders, bzw. der Extruder, auswirken. Additive zur Verringerung der Verblockungsneigung umfassen meist mineralische Füllstoffe, die einen erhöhten Verschleiß der Komponenten des Extruders, insbesondere der Schnecke, zur Folge haben können.

Zur Verbesserung der Planlage des Folienschlauchs kann hingegen der Folienschlauch nachbeheizt werden, um ungleichmäßige Spannungsverteilungen der molekularen Struktur abzubauen. Dies bewirkt eine Verbesserung der Planlage bzw. der Ebenheit des Folienschlauchs.

Von Vorteil ist hierbei insbesondere, dass ein und dieselbe Nachtemperiereinheit sowohl zum Kühlen von Schlauchfolien aus verblockungssensitivem Material als auch zum Heizen von Schlauchfolien aus planlagesensitivem Material gleichermaßen geeignet ist. Somit muss bei einer Umstellung zwischen verblockungssensitivem Material und planlagesensitivem Material die Nachtemperiereinheit nicht ausgetauscht werden.

Zum Anblasen des Folienschlauchs mit Temperiergas können die Anblaselemente jeweils zumindest eine nach innen weisende Anblasdüse aufweisen. Die zumindest eine Anblasdüse kann als Schlitz in Umfangsrichtung um den Folienschlauch ausgebildet sein. Es können auch mehrere kurze Schlitze oder Öffnungen hintereinander bzw. nebeneinander in Umfangsrichtung angeordnet sein. Die zumindest eine Anblasdüse sollte derart ausgebildet oder angeordnet sein, dass eine gleichmäßige Anströmung des Folienschlauchs mit Temperiergas ermöglicht wird.

In einer Ausgestaltung der Folienblasanlage können die Anblaselemente und/oder ein Luftverteilerring, der radial außerhalb der Anblaselemente angeordnet ist und diese mit Temperiergas versorgt, jeweils zumindest eine radial außerhalb der zumindest einen Anblasdüse zumindest im Wesentlichen parallel zur Längsachse weisende Auslassdüse aufweisen, um einen um die Längsachse ringförmig, achsparallel ausströmenden Luftschleier zu erzeugen. Es ist auch denkbar, dass zur Erzeugung eines Luftschleiers auch ein separater Ring vorgesehen ist. Der Luftschleier umhüllt die Temperiergasströmung und schützt diese vor äußeren Einflüssen und vor einem zu starken Vermengen mit Umgebungsluft mit abweichender Temperatur.

Es kann von Vorteil sein, dass die Anblaselemente stromab der Führungselemente angeordnet sind. Das Temperiergas trifft nach dem Austritt aus der zumindest einen Anblasdüse auf den Folienschlauch und wird in Abzugsrichtung des Folienschlauchs mitgezogen. Wenn die Anblaselemente stromab der Führungselemente angeordnet sind, trifft, zumindest ein Teil, vorzugsweise der größte Teil, des Temperiergases nicht auf die Führungselemente und wird somit nicht abgelenkt oder verwirbelt. Damit wird eine möglichst lange Strecke ermöglicht, über die das Temperiergas unbeeinflusst auf den Folienschlauch einwirken kann.

In einer beispielhaften Ausführungsform sind die Anblaselemente und die Führungselemente synchron verstellbar. Somit ist sichergestellt, dass unabhängig vom Durchmesser des Folienschlauchs die Anblaselemente stets einen konstanten Abstand zum Folienschlauch aufweisen bzw. die Anblaselemente zu den Führungselemente um einen konstanten Betrag radial zurückversetzt sind.

Um ein synchrones Verstellen von Anblaselementen und Führungselementen zu ermöglichen, kann die Nachtemperiereinheit beispielsweise mehrere über den Umfang verteilt angeordnete Träger aufweisen, die verstellbar am Rahmen angelenkt sind. An den Trägern kann dann jeweils zumindest eines der Anblaselemente und zumindest eines der Führungselemente befestigt sein.

Bei einer Anordnung der Anblaselemente radial zurückversetzt zu den Führungselemente ist der Durchmesser der Führungsöffnung der Nachtemperiereinheit, die durch die Führungselemente gebildet wird, kleiner ist als der Durchmesser der Durchführöffnung der Nachtemperiereinheit, die durch die Anblaselemente gebildet wird.

Gemäß einer beispielhaften Ausführungsform umfasst die Folienblasanlage stromab der Nachtemperiereinheit eine Flachlegeeinheit zum Zusammenlegen des Folienschlauchs. Hierbei ist ein Bereich zwischen der Nachtemperiereinheit und der Flachlegeeinheit frei von den Folienschlauch beeinflussenden Elementen.

Stromab der Nachtemperiereinheit kann eine ringförmige Leitblechanordnung angeordnet sein, durch die der Folienschlauch hindurchgeführt wird. Die Leitblechanordnung kann aus einzelnen Leitblechen bestehen, die jeweils mit einem der Träger der Anblaselemente oder der Führungselemente verbunden sind. Die einzelnen Leitbleche sind über den Umfang nebeneinander angeordnet und bilden zusammen einen Ring. Die Leitblechanordnung dient dazu, das Temperiergas über eine bestimmte Länge an dem Folienschlauch zu halten und vor äußeren Einflüssen zu schützen und ein zu starkes Vermengen mit Umgebungsluft mit abweichender Temperatur zu vermeiden.

Die Nachtemperiereinheit kann zudem eine Absaugeinheit zum zumindest teilweisen Absaugen des Temperiergases aufweisen. Wenn die Anblaselemente weitestgehend in Abzugsrichtung ausblasen, kann die Absaugeinheit stromab der Anblaselemente angeordnet sein. Wenn die Anblaselemente weitestgehend entgegen der Abzugsrichtung ausblasen, kann die Absaugeinheit stromauf der Anblaselemente angeordnet sein. Die Absaugeinheit kann mit einer Zuführung für Temperiergas der Anblaselemente strömungsverbunden sein. Hierdurch ist es unter bestimmten Bedingungen möglich, den Energieeinsatz zum Vortemperieren des Temperiergases zu reduzieren. Insbesondere kann eine Regelung vorgesehen werden, die den Volumenstrom des rückgeführten Temperiergases mittels der Absaugeinheit regelt, um eine möglichst hohe Energierückgewinnung zu erzielen.

In einem Ausführungsbeispiel ist stromauf der Anblaselemente über den Umfang um die Längsachse zumindest ein Temperatursensor zum Erfassen der Temperatur des Folienschlauchs angeordnet. Ferner ist stromab der Anblaselemente über den Umfang um die Längsachse zumindest ein Temperatursensor zum Erfassen der Temperatur des Folienschlauchs angeordnet. Die Folienblasanlage umfasst zudem einen Temperatursensor zum Erfassen der Temperatur des Temperiergases. Somit kann die Temperatur des Folienschlauchs stromab der Anblaselemente ermittelt und geregelt werden. Hierzu kann der Temperatursensor am Träger für die Anblaselemente bzw. die Führungselemente oder am Rahmen im Bereich des Auslasses der Nachtemperiereinheit angeordnet sein oder an einem beliebigen anderen Element der Folienblasanlage stromab der Nachtemperiereinheit.

In einer Ausführungsform kann mittels des Temperatursensors stromauf der Anblaselemente die Temperatur des Folienschlauchs ermittelt werden. Hierzu kann der Temperatursensor am Träger für die Anblaselemente bzw. die Führungselemente oder am Rahmen im Bereich des Einlasses der Nachtemperiereinheit angeordnet sein oder an einem beliebigen anderen Element der Folienblasanlage stromauf der Nachtemperiereinheit.

Je nach Temperatur des Folienschlauchs stromauf und/oder stromab der Anblaselemente oder einer Temperaturdifferenz der Temperaturen des Folienschlauchs stromauf und stromab der Anblaselemente und einer Differenz zwischen einer Soll-Temperatur und der Ist-Temperatur des Folienschlauchs stromab der Anblaselemente kann die Temperatur und/oder der Volumenstrom bzw. der Druck des Temperiergases eingestellt werden.

Dazu kann die Folienblasanlage zudem einen Drucksensor oder Volumenstromsensor zum Erfassen des Drucks bzw. des Volumenstroms des Temperiergases innerhalb eines Leitungssystems zur Versorgung der Anblaselemente mit Temperiergas umfassen. Hierbei kann mittels des Drucks auf den Volumenstrom des Temperiergases geschlossen werden.

Die Aufgabe wird ferner durch ein Verfahren zum Regeln einer Folienblasanlage gelöst, wobei die Temperatur des Folienschlauchs stromab der Nachtemperiereinheit zumindest bereichsweise über den Umfang auf eine Soll-Temperatur geregelt wird. Zur Vermeidung einer Verblockung des Folienschlauchs oder zur Verbesserung der Planlage ist es wichtig, dass die Temperatur des Folienschlauchs auf eine bestimmte Soll-Temperatur geregelt wird.

Hierbei kann zur Vermeidung einer Verblockung der Folienschlauch stromab der Nachtemperiereinheit zumindest bereichsweise über den Umfang gekühlt werden. Zur Erhörung der Planlagequalität kann der Folienschlauch stromab der Nachtemperiereinheit zumindest bereichsweise über den Umfang erhitzt werden.

Hierzu kann die Temperatur des Folienschlauchs stromab der Nachtemperiereinheit, insbesondere in einem Bereich eines Auslaufs der Nachtemperiereinheit, aus dem der Folienschlauch aus der Nachtemperiereinheit austritt, gemessen werden und eine Temperatur und/oder ein Volumenstrom des Temperiergases in Abhängigkeit der Differenz der gemessenen Temperatur des Folienschlauchs und der Soll-Temperatur des Folienschlauchs eingestellt werden. Bei der Soll-Temperatur kann es sich um einen spezifischen absoluten Temperaturwert handeln. Alternativ ist es auch möglich, dass sich die Soll-Temperatur aus einem Differenzwert ausgehend von einer Ist-Temperatur des Folienschlauchs vor Durchlaufen der Nachtemperiereinheit ergibt. In diesem Fall berechnet sich die Soll-Temperatur aus der Ist-Temperatur des Folienschlauchs vor Durchlaufen der Nachtemperiereinheit zuzüglich oder abzüglich eines ggf. festen Temperatur-Differenzwertes.

Der Temperatursensor zum Messen der Temperatur der Schlauchfolie kann an einer beliebigen Stelle stromab der Nachtemperiereinheit angeordnet sein, zum Beispiel an der Flachlegeeinheit. Der Temperatursensor kann auch Bestandteil der Nachtemperiereinheit sein, wobei der Temperatursensor dann im Bereich eines Auslaufs der Nachtemperiereinheit angeordnet ist.

In speziellen Anwendungen kann es erforderlich sein, das Temperaturprofil über den Umfang unterschiedlich zu beeinflussen, um zum Beispiel aufgrund lokaler Bedingungen ausgehend von einem ungleichförmigen Temperaturprofil über den Umfang eine konstantes Temperaturprofil über den Umfang einzustellen. Genauso kann es erforderlich sein, ein ungleichförmiges Temperaturprofil über den Umfang einzustellen. Hierzu kann vorgesehen sein, dass ein Temperaturprofil des Folienschlauchs stromab der Nachtemperiereinheit, insbesondere in einem Bereich des Auslaufs der Nachtemperiereinheit, aus dem der Folienschlauch aus der Nachtemperiereinheit austritt, über den Umfang gemessen wird und dass Temperaturen und/oder Volumenströme des Temperiergases der über den Umfang verteilt angeordneten Anblaselemente jeweils in Abhängigkeit der Differenz der Temperatur im jeweiligen Umfangsbereich des Folienschlauchs des jeweiligen Anblaselementes und der Soll-Temperatur im jeweiligen Umfangsbereich des Folienschlauchs eingestellt werden.

Die Temperatur des Temperiergases kann zwischen 5 °C und 150 °C, insbesondere zwischen 8 °C und 110 °C, liegen. Die Soll-Temperatur des Folienschlauchs stromab des Nachtemperiereinheit kann zwischen 35 °C und 110 °C, insbesondere zwischen 45 °C und 80 °C, liegen.

Ferner kann ein ringförmiger Luftschleier im Wesentlichen parallel zur Längsachse und um die Strömung des Temperiergases ausgeblasen werden. Der Luftschleier umhüllt somit die Temperiergasströmung und schützt diese vor äußeren Einflüssen und vor einem zu starken Vermengen mit Umgebungsluft, die eine vom Temperiergas abweichende Temperatur aufweist.

Beispielhafte Ausführungsformen werden im Folgenden unter Bezugnahme auf die Figuren näher erläutert. Hierin zeigt
- Figur 1: eine Gesamtansicht einer Folienblasanlage mit einer ersten Ausführungsform einer Nachtemperiereinheit,
- Figur 2: eine vergrößerte Darstellung einer Folienblasanlage im Bereich einer zweiten Ausführungsform einer Nachtemperiereinheit,
- Figur 3: eine vergrößerte Darstellung einer Folienblasanlage im Bereich einer dritten Ausführungsform einer Nachtemperiereinheit,
- Figur 4: eine vergrößerte Darstellung einer Folienblasanlage im Bereich einer vierten Ausführungsform einer Nachtemperiereinheit,
- Figur 5: eine Draufsicht der Nachtemperiereinheit gemäß Figur 1,
- Figur 6: eine Seitenansicht auf die Nachtemperiereinheit gemäß Figur 5 von der Längsachse aus radial nach außen gesehen und
- Figur 7: eine vergrößerte Draufsicht der Nachtemperiereinheit gemäß Figur 5 in einer weiteren Ausführungsform.

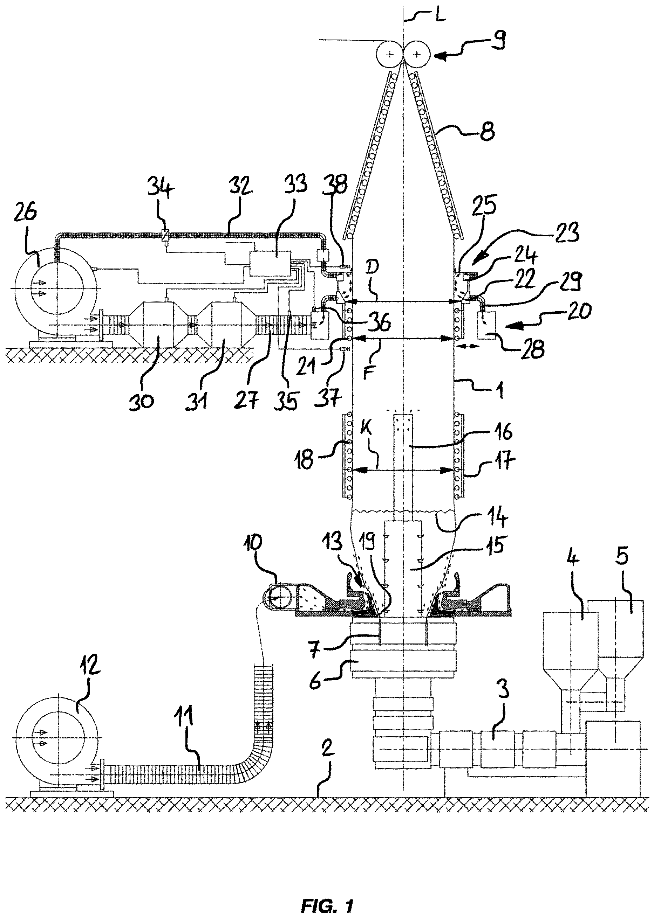

In Figur 1 ist in Seitenansicht, teilweise im Längsschnitt entlang einer Längsachse L eine Folienblasanlage zur Herstellung eines Folienschlauchs 1 gezeigt. Auf einem Maschinenfundament 2 steht ein Extruder 3, an dem zwei Aufgabetrichter 4, 5 für thermoplastisches Kunststoffmaterial zu erkennen sind. Ein in Granulatform über die Aufgabetrichter 4, 5 aufgegebenes thermoplastisches Kunststoffmaterial wird durch Druck und zusätzliche Heizmittel in einer Schnecke des Extruders 3 plastifiziert und homogenisiert und in einen sich an den Extruder 3 anschließenden Blaskopf 6 mit vertikaler Achse entlang der Längsachse L der Folienblasanlage gedrückt. Der Blaskopf 6 hat auf einer Oberseite eine schematisch dargestellte Ringdüse 7, aus welcher der sich erweiternde achssymmetrische Folienschlauch 1 aus zunächst noch plastifiziertem Folienmaterial austritt. Nach Erstarrung des Folienmaterial behält der Folienschlauch 1 seinen Durchmesser im Wesentlichen bei. Der Folienschlauch 1 wird in einer Flachlegeeinheit 8 flach gedrückt und über ein Abziehwerk 9 nach oben abgezogen. Der flachgedrückte Folienschlauch 1 wird anschließend auf Coils bzw. Wickel (hier nicht dargestellt) aufgewickelt. In Richtung vom Blaskopf 6 zum Abziehwerk 9 werden die funktionellen Begriffe "vor" und "stromab" derart verwendet, dass sie in räumlicher Beziehung "unter" und "oberhalb" bedeuten.

Unmittelbar über dem Blaskopf 6 ist ein Kühlgasring 10 mit einer teilweise schematisch dargestellten Gaszuleitung 11 gezeigt. Die Gaszuleitung 11 ist eingangsseitig mit einem Gebläse 12 verbunden, über das Kühlgas, in der Regel Luft, zum Kühlgasring 10 gefördert wird. Hierzu wir vom Gebläse 12 Umgebungsluft angesaugt. Es können auch andere Kühlgase oder Kühlgasgemischen eingesetzt werden. Der Kühlgasring 10 hat innenliegende Austrittsdüsen 13, aus denen das Kühlgas ausströmt und den Folienschlauch 1, der unter erhöhtem Innendruck steht und durch eine zentrale Öffnung 19 des Kühlgasrings 10 hindurchgeführt wird, ringförmig im Wesentlichen wandparallel anströmt. Die Kühlgasströmung vom Gebläse 12 bis hin zum Folienschlauch 1 ist mit Pfeilen symbolisiert. Der in diesem Bereich plastifizierte Folienschlauch 1 erweitert sich zunächst im Durchmesser unter dem genannten Überdruck im Inneren, bis er unter der Wirkung des Kühlgases erhärtet und einen konstanten Durchmesser annimmt. Der Ort des Übergangs vom plastifizierten Material zum erhärteten Material wird "Einfriergrenze" genannt und ist mit 14 bezeichnet. Zur Erzeugung eines inneren Überdrucks ist zentral am Blaskopf 6 eine Innenkühlturm 15 angebracht, über den Kühlgas in das Innere des Folienschlauchs 1 eingeleitet wird. Über ein Gasabsaugrohr 16 wird das eingeleitete Kühlgas derart abgeführt, dass ein definierter Innendruck herrscht.

Oberhalb, das heißt in Abzugsrichtung entlang der Längsachse L stromab von der Einfriergrenze 14, befindet sich ein Kalibrierkorb 17, der Kalibrierelemente 18 mit übereinanderliegenden Laufrollenanordnungen enthält, die sich im Wesentlichen ringförmig um den Folienschlauch 1 legen. Um eine Anpassung an Folienschläuche 1 unterschiedlichen Durchmessers zu ermöglichen, befinden sich hierbei die Laufrollenanordnungen in der Regel auf einzelne Teilumfänge bildenden schwenkbaren Segmenten, mittels derer der Durchmesser einer Kalibrieröffnung des Kalibrierkorbs 17, durch die der Folienschlauch 1 entlang der Längsachse L hindurchgeführt ist, verändert werden kann. Im Querschnitt bilden diese Segmente eine polygonförmige Kalibrieröffnung. Im gezeigten Beispiel weist die Kalibrieröffnung den Durchmesser Kauf.

Der noch relativ warme Folienschlauch 1 wird durch den Kalibrierkorb 17 im Querschnitt stabilisiert und geführt. Der Kalibrierkorb 17 kann relativ zum Blaskopf 6 höhenverstellbar angeordnet sein, um stets eine optimale Höhenposition relativ zur Einfriergrenze 14 einnehmen zu können.

Stromab des Kalibrierkorbs 17 ist eine Nachtemperiereinheit 20 angeordnet, die zum

Nachtemperieren des Folienschlauchs 1 dient. Die Nachtemperiereinheit 20 weist mehrere Führungselemente 21 mit Laufrollenanordnungen auf, wobei anstelle der Laufrollenanordnungen auch andere Führungselemente vorgesehen sein können. Die Führungselemente 21 umschließen den Folienschlauch 1 und bilden eine Führungsöffnung mit einem Durchmesser F. Im vorliegenden Ausführungsbeispiel ist der Durchmesser F der Führungsöffnung identisch zum Durchmesser K der Kalibrieröffnung. Die Führungselemente 21 dienen unter anderem zum Führen des Folienschlauchs 1 zentrisch zur Längsachse L, sodass der Folienschlauch 1 zentrisch geführt in die Flachlegeeinheit 8 geführt wird, um Falten oder Kantenversatz zu vermeiden. Wie nachfolgend noch detailliert erläutert wird, sind die Führungselemente 21 an einem Rahmen der Nachtemperiereinheit 20 verstellbar angelenkt, um den Durchmesser F der Führungsöffnung variieren zu können.

Darüber hinaus weist die Nachtemperiereinheit 20 mehrere Anblaselemente 22 auf, die den Folienschlauch 1 umschließen und eine Durchführöffnung für den Folienschlauch 1 mit einem Durchmesser D bilden. Auch die Anblaselemente 22 sind wie nachfolgend näher erläutert wird zum Einstellen des Durchmessers D der Durchführöffnung verstellbar am Rahmen der Nachtemperiereinheit 20 verstellbar angelenkt. Die Anblaselemente 22 blasen das Temperiergas schräg nach oben in Abzugsrichtung auf den Folienschlauch 1 aus. Grundsätzlich ist es jedoch auch denkbar, dass das Temperiergas horizontal, das heißt in einer Ebene senkrecht zur Längsachse L, gegen den Folienschlauch 1 ausgeblasen wird.

Die Durchmesser K, F und D sind jeweils definiert als der größtmögliche Durchmesser eines gedachten Kreises innerhalb der verstellbaren Elemente, also der Kalibrierelemente 18 des Kalibrierkorbs 17 sowie der Führungselemente 21 und der Anblaselemente 22 der Nachtemperiereinheit 20.

Stromab der Anblaselemente 22 ist eine Absaugeinheit 23 angeordnet, durch die der Folienschlauch 1 zentral hindurchgeführt ist. Die Absaugeinheit 23 umfasst einen oder mehrere Absaugelemente 24 zum Absaugen von Temperiergas. Damit möglichst viel Temperiergas abgesagt werden kann, bevor dieses in die Umgebung gelangt, ist stromab des zumindest einen Absaugelements 24 eine Leitblechanordnung mit mehreren Leitblechen 25 vorgesehen, die rondenförmig ausgebildet und quer zur Längsachse L angeordnet ist und einen verhältnismäßig kleinen Abstand zum Folienschlauch 1 im Vergleich zum Abstand des zumindest einen Absaugelements 24 aufweist. Die einzelnen Leitbleche 25 sind jeweils an einem der Anblaselemente 22 befestigt, können aber auch an einem Träger 47, an dem die Anblaselemente 22 befestigt sind, angeordnet sein. Das Absaugelement 24 kann als starrer umlaufender Ring gestaltet sein. Alternativ ist es auch möglich, dass mehrere Absaugelemente 24 über den Umfang verteilt angeordnet ist, wobei diese ähnlich den Anblaselementen 22 schwenkbar angeordnet sind, um einen Innendurchmesser der Absaugeinheit 23 variieren und an unterschiedliche Folienschlauchdurchmesser anpassen zu können.

Die Anblaselemente 22 werden von einem Gebläse 26 mit Temperiergas versorgt. Das Gebläse 26 saugt Umgebungsluft an und leitet diese zu den Anblaselemente 22. Hierzu dient eine Zuführleitung 27, die das Gebläse 26 mit einem Luftverteilerring 28 der Nachtemperiereinheit 20 verbindet. Der Luftverteilerring 28 ist ringförmig um den Folienschlauch 1 und in dem gezeigten Ausführungsbeispiel um die Führungselemente 21 angeordnet und dient zum gleichmäßigen Verteilen des Temperiergases über den Umfang. Der Luftverteilerring 28 ist über Zuleitungen 29 mit den einzelnen Anblaselement 22 strömungsverbunden.

In der Zuführleitung 27 ist eine Kühleinheit in Form eines Luftkühlers 30 sowie eine Heizeinheit in Form eines Lufterhitzers 31 angeordnet, wobei auch externe Kühl- oder Heizquellen genutzt werden können. Somit kann das Temperiergas wahlweise gekühlt oder erhitzt werden, bevor es zu den Anblaselement 22 geleitet wird. Alternativ ist es auch möglich, dass nur ein Luftkühler 30 oder nur ein Lufterhitzer 31 vorgesehen ist. Die Anordnungsreihenfolge des Gebläses 26, des Luftkühlers 30 und des Lufterhitzers 31 kann beliebig gewählt werden.

Es ist anzumerken, dass das Gebläse 26, der Luftkühler 30 und der Lufterhitzer 31 in Höhe der Nachtemperiereinheit 20 dargestellt sind. Hierzu können diese Bauteile in einem Turmgerüst der Folienblasanlage angeordnet sein. Sie können jedoch auch auf dem Maschinenfundament stehen.

Das mindestens eine Absaugelement 24 ist über eine Absaugleitung 32 mit dem Gebläse 26 strömungsverbunden. Somit kann zur Energierückgewinnung das Temperiergas über das Gebläse 26 stromauf des Luftkühlers 30 und des Lufterhitzers 31 eingespeist werden, um die erforderliche Heiz- oder Kühlleistung zu reduzieren.

Die Folienblasanlage weist ferner eine Steuerung 33 auf, die steuerungstechnisch mit dem Gebläse 26, dem Luftkühler 30 und dem Lufterhitzer 31 verbunden ist, um diese zu steuern. Darüber hinaus ist die Steuerung 33 mit einer Steuerklappe 34 in der Absaugleitung 32 steuerungstechnisch verbunden, um den Volumenstrom des rückgeführten Temperiergases in der Absaugleitung 32 zu steuern. Für die Steuerung werden die Signale mehrerer Sensoren verarbeitet. Die Steuerung 33 ist mit einem Temperatursensor 35 in der Zuführleitung 27 zum Erfassen der Temperatur des Temperiergases, mit einem Drucksensor 36 am Luftverteilerring 28 zum Detektieren des Drucks im Luftverteilerring 28, mit einem Temperatursensor 37 stromauf der Nachtemperiereinheit 20 zum Erfassen der Temperatur des Folienschlauchs 1 vor dem Einlauf in die Nachtemperiereinheit 20 und mit einem Temperatursensor 38 stromab der Nachtemperiereinheit 20 zum Erfassen der Temperatur des Folienschlauchs 1 nach dem Auslauf aus der Nachtemperiereinheit 20 verbunden.

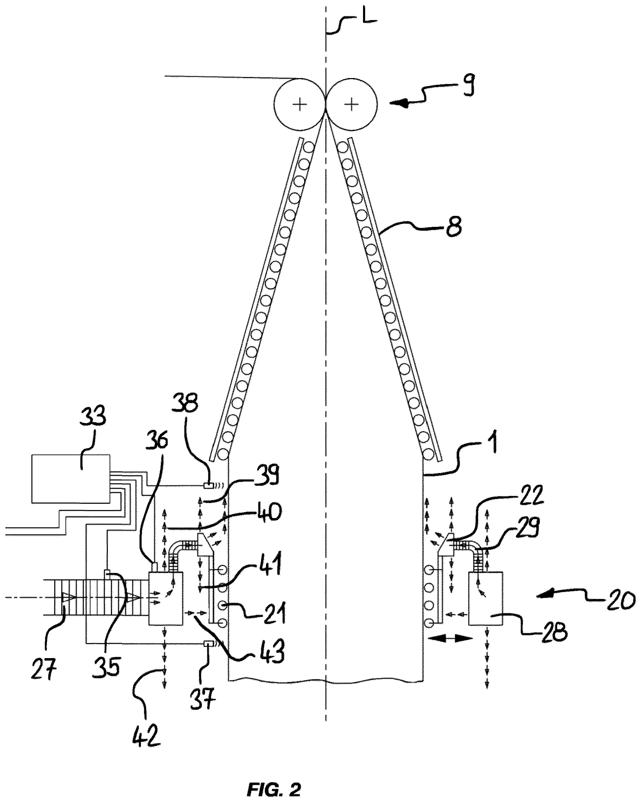

Figur 2 zeigt eine vergrößerte Darstellung einer Folienblasanlage im Bereich einer zweiten Ausführungsform einer Nachtemperiereinheit 20. Bauteile, die mit Bauteilen der Folienblasanlage gemäß Figur 1 übereinstimmen, sind mit denselben Bezugszeichen versehen und dort beschrieben.

Im Unterschied zu der Nachtemperiereinheit 20 gemäß der ersten Ausführungsform weist die Nachtemperiereinheit 20 der zweiten Ausführungsform keine Absaugeinheit und keine Leitblechanordnung auf. Um das Temperiergas, dass aus den Anblaselemente 22 ausströmt, möglichst laminar entlang der Oberfläche des Folienschlauchs 1 strömen zu lassen, können ein oder mehrere Luftschleier ausgeblasen werden. Zum Beispiel kann ein in Abzugsrichtung strömender innerer Luftschleier 39 ausgeblasen werden, der durch nicht näher dargestellte Öffnungen in den Anblaselementen 22 ausströmt und somit das Temperiergas zwischen sich und dem Folienschlauch 1 umschließt. Alternativ oder zusätzlich kann ein in Abzugsrichtung strömender äußerer Luftschleier 40 ausgeblasen werden, der durch nicht näher dargestellte Öffnungen des Luftverteilerrings 28 ausströmt.

Wiederum alternativ oder zusätzlich kann ein gegen die Abzugsrichtung strömender innerer Luftschleier 41 vorgesehen sein, der aus nicht näher dargestellten Öffnungen der Anblaselemente 22 ausgeblasen wird. Ferner kann alternativ oder zusätzlich ein gegen die Abzugsrichtung strömender äußerer Luftschleier 42 vorgesehen sein, der aus nicht näher dargestellten Öffnungen des Luftverteilerrings 28 ausgeblasen wird.

Darüber hinaus kann zusätzlich oder alternativ ein radial strömender unterer Luftschleier 43 aus nicht näher dargestellten Öffnungen des Luftverteilerrings 28 ausgeblasen werden.

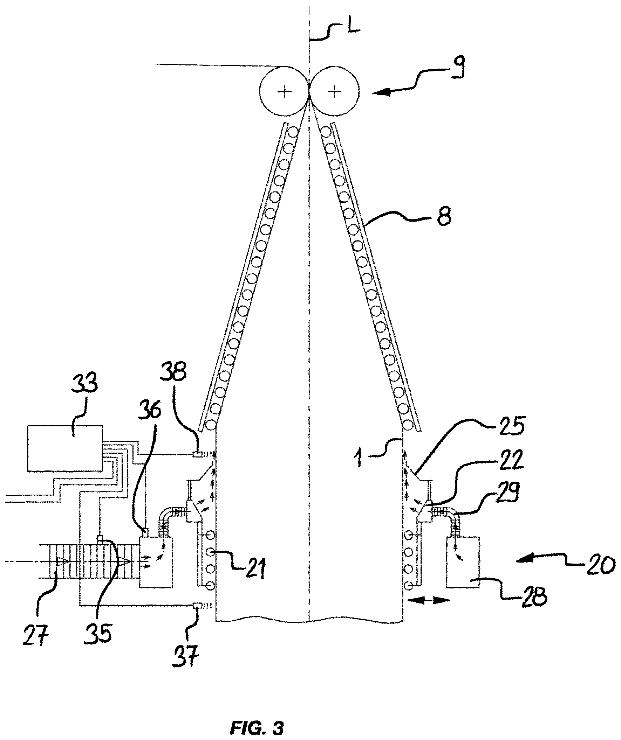

Figur 3 zeigt eine vergrößerte Darstellung einer Folienblasanlage im Bereich einer dritten Ausführungsform einer Nachtemperiereinheit 20. Bauteile, die mit Bauteilen der Folienblasanlage gemäß der Figuren 1 und 2 übereinstimmen, sind mit denselben Bezugszeichen versehen und dort beschrieben.

Im Unterschied zu der Nachtemperiereinheit 20 gemäß der zweiten Ausführungsform sind keine Luftschleier vorgesehen. Stattdessen weist die Nachtemperiereinheit 20 eine Leitblechanordnung aus mehreren Leitblechen 25 auf, die stromab der Anblaselemente 22 angeordnet sind. Die einzelnen Leitbleche 25 sind jeweils an einem der Anblaselemente 22 befestigt, können aber auch an einem Träger 47, an dem die Anblaselemente 22 befestig sind, angeordnet sein. Die Leitbleche 25 bilden in dem gezeigten Ausführungsbeispiel eine kegelstumpfförmige Leitblechanordnung und einen schmalen ringförmigen Schlitz zwischen den einzelnen Leitblechen 25 und dem Folienschlauch 1 zum Hindurchführen des Temperiergases.

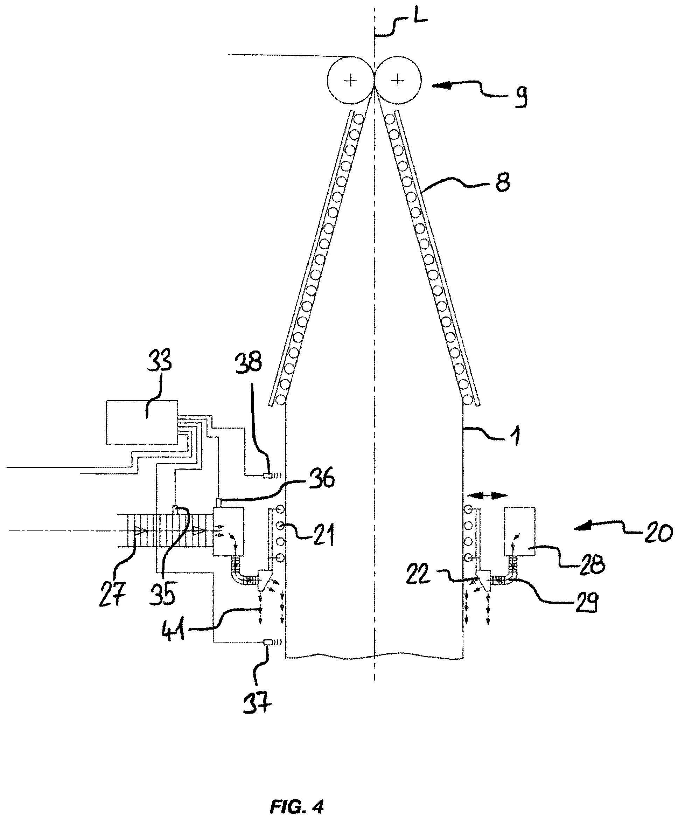

Figur 4 zeigt eine vergrößerte Darstellung einer Folienblasanlage im Bereich einer vierten Ausführungsform einer Nachtemperiereinheit 20. Bauteile, die mit Bauteilen der Folienblasanlage gemäß der Figuren 1 bis 3 übereinstimmen, sind mit denselben Bezugszeichen versehen und dort beschrieben.

Im Unterschied zu den Nachtemperiereinheit 20 gemäß der ersten drei Ausführungsformen sind bei der vierten Ausführungsform die Anblaselemente 22 stromauf der Führungselemente 21 angeordnet. Zudem blasen die Anblaselemente 22 nicht schräg nach oben in Abzugsrichtung, sondern schräg nach unten entgegen der Abzugsrichtung.

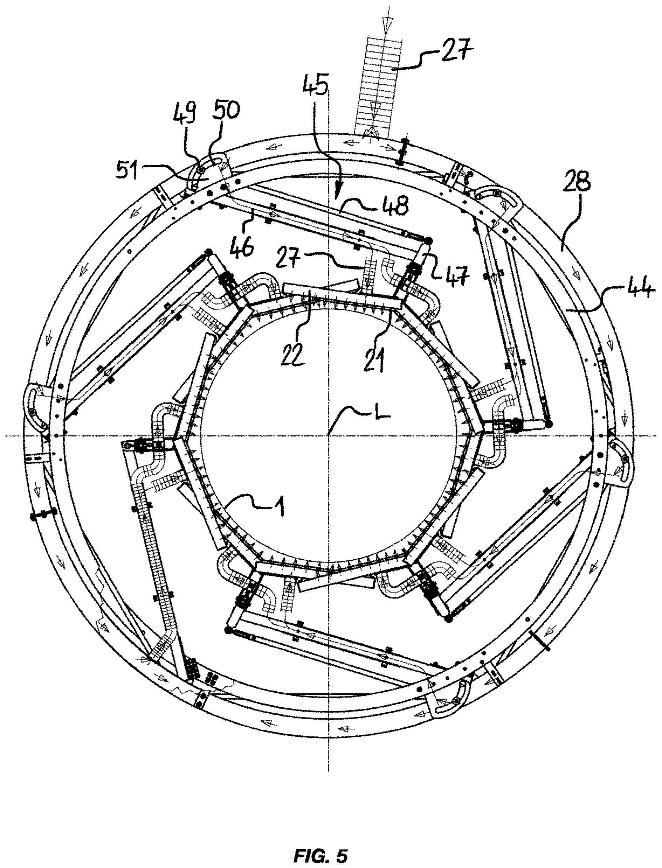

Figur 5 zeigt eine Draufsicht der Nachtemperiereinheit 20 gemäß Figur 1, wobei Bauteile, die mit Bauteilen der Folienblasanlage gemäß Figur 1 übereinstimmen, mit denselben Bezugszeichen versehen und dort beschrieben sind.

Die Nachtemperiereinheit 20 weist einen Rahmen 44 auf, an dem die nachfolgend beschriebenen beweglichen Elemente befestigt sind und der gegebenenfalls relativ zum Blaskopf höhenverstellbar angeordnet ist. An dem Rahmen 44 ist ferner der Luftverteilungsring 28 befestigt.

Der Rahmen 44 bildet einen zentralen Durchgang, durch den der Folienschlauch 1 parallel zur Längsachse L gemäß Figur 1 hindurchgeführt ist. Über den Umfang sind sechs Verstelleinheiten 45 verteilt angeordnet. Die Verstelleinheiten 45 dienen zum Verstellen der Führungselementen 21 in einer Richtung radial zur Längsachse L.

Die Verstelleinheiten 45 weisen jeweils einen Schwenkarm 46 auf, der am Rahmen 44 schwenkbar befestigt ist. Der Schwenkarm 46 ist hierbei um eine Schwenkachse schwenkbar, die parallel zur Längsachse L angeordnet ist.

Ferner weisen die Verstelleinheiten 45 jeweils einen Träger 47 auf, der in dem gezeigten Ausführungsbeispiel zwei Führungselemente 21 in Form von Laufrollen trägt, die in Richtung der Längsachse L voneinander beabstandet und in Richtung der Längsachse L betrachtet V-förmig überlappend angeordnet sind. Der Träger 47 ist schwenkbar mit dem Schwenkarm 46 verbunden. Der Träger 47 ist hierbei um eine Schwenkachse schwenkbar mit dem Schwenkarm 46 verbunden, die parallel zur Längsachse L angeordnet ist.

Ferner weisen die Verstelleinheiten 45 jeweils eine Koppelstange 48 auf, die mit dem Träger 47 schwenkbar verbunden ist.

Letztendlich weisen die Verstelleinheiten 45 jeweils einen Stellmechanismus auf, mittels dessen die Koppelstange 48 gelenkig mit dem Rahmen 44 verbunden ist.

Zur Darstellung des Stellmechanismus sind die Koppelstangen 48 der Verstelleinheiten 45 jeweils über ein Koppelelement (nicht dargestellt) drehgelenkig und verschiebbar mit dem Rahmen 44 verbunden. Das Koppelelement ist drehbar mit dem Rahmen 44 verbunden. Die Koppelstange 48 ist verschiebbar mit dem Koppelelement gekoppelt. Darüber hinaus ist jeweils an der Koppelstange 48 ein Mitnehmer 49 befestigt, der entlang einer Führung 50 am Rahmen 44 translatorisch bewegbar geführt ist. Die Führung 50 ist in dem gezeigten Ausführungsbeispiel eine Nut in einer Platte 51, die fest am Rahmen 44 befestigt ist. Es sind jedoch auch andere Führungssysteme denkbar. Die Führung 50 ist kurvenförmig gestaltet und derart angepasst, dass der Träger 47 stets zentrisch zur Längsachse L ausgerichtet ist, unabhängig vom Abstand zur Längsachse L bzw. zum Folienschlauch 1. Hierdurch wird eine präzise zentrische Ausrichtung der Führungselemente 21 in Form der beiden Laufrollen relativ zum Folienschlauch 1 gewährleistet, damit stets beide Laufrollen in Anlage zum Folienschlauch 1 gehalten sind.

Grundsätzlich sind auch andere Stellmechanismen, wie zum Beispiel Parallelogramm-Anordnungen denkbar, wobei gewährleistet sein sollte, dass die Träger 47 zumindest weitestgehend radial zur Längsachse L verstellbar sind.

An dem Träger 47 sind zudem die Anblaselemente 22 befestigt, wobei diese geringfügig radial gegenüber den Führungselementen 21 zurückversetzt sind. In dem gezeigten Ausführungsbeispiel sind die Anblaselemente 22 jeweils in axialer Überdeckung zu einem der Führungselemente 21 angeordnet.

In der gezeigten Darstellung gemäß Figur 5 sind die Führungselemente 21 noch nicht vollständig an den Folienschlauch 1 herangeführt, um diesen zu führen. Der Übersichtlichkeit halber sind die Führungselemente 21 etwas beabstandet zum Folienschlauch 1 dargestellt.

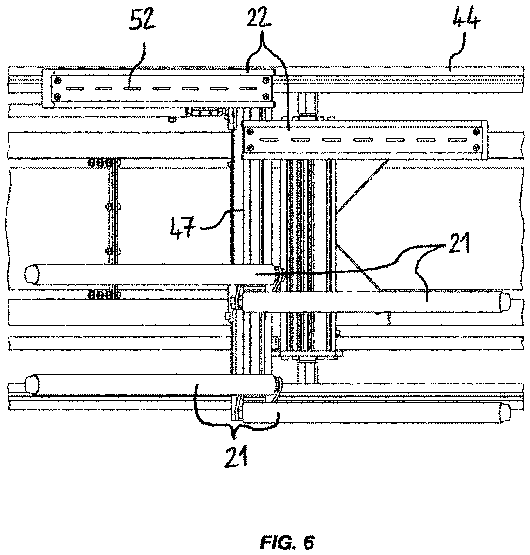

Figur 6 zeigt eine Seitenansicht auf die Nachtemperiereinheit gemäß Figur 5 von der Längsachse aus radial nach außen gesehen. An dem Träger 47 sind vier Führungselemente 21 und zwei Anblaselemente 22 fest montiert. Die Führungselemente 21 in Form von Laufrollen sind paarweise V-förmig überlappend übereinander angeordnet. Die beiden Paare von Führungselementen 21 sind in übereinstimmender Anordnung übereinander angeordnet.

Über den Führungselementen 21, das heißt stromab der Führungselemente 21, sind die beiden Anblaselemente 22 angeordnet. Die Anblaselemente 22 sind analog zu den Führungselemente 21 ebenfalls V-förmig überlappend übereinander angeordnet. Die Anblaselemente 22 weisen nach innen, das heißt in Richtung auf den Folienschlauch zu, Anblasöffnungen 52 auf. Durch die Anblasöffnungen 52 tritt das Temperiergas aus und strömt gegen die Oberfläche des Folienschlauchs. In dem gezeigten Ausführungsbeispiel sind die Anblasöffnungen 52 derart angeordnet, dass das Temperiergas, im Gegensatz zu den Ausführungsformen gemäß den Figuren 1 bis 4, nicht schräg zur Längsachse in oder entgegen der Abzugsrichtung, sondern horizontal, das heißt in einer Ebene senkrecht zur Längsachse L, gegen den Folienschlauch ausgeblasen wird.

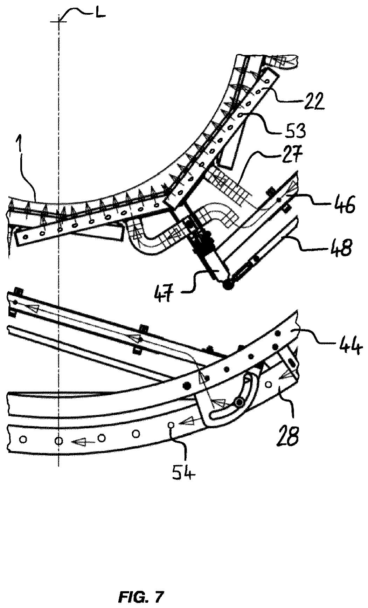

Figur 7 zeigt eine vergrößerte Draufsicht der Nachtemperiereinheit gemäß Figur 5 in einer weiteren Ausführungsform. Die gezeigte Ausführungsform der Nachtemperiereinheit ist mit derjenigen gemäß Figur 5 weitestgehend identisch, wobei übereinstimmende Bauteile mit denselben Bezugszeichen versehen sind. Im Unterschied zur Ausführungsform gemäß Figur 5 weisen die Anblaselemente 22 Auslassdüsen 53 auf, die parallel zur Längsachse L ausgerichtet sind. Die Auslassdüsen 53 blasen Temperiergas achsparallel zur Längsachse L nach oben aus und bilden somit einen um die Längsachse L umlaufenden Luftschleier aus. Sie können jedoch auch zusätzliche oder alternative an einer Unterseite der Anblaselemente 22 angeordnet sein und einen Luftschleier nach unten ausblasen.

Ferner sind in der gezeigten Ausführungsform auch am Luftverteilerring 28 Auslassdüsen 54 vorgesehen, die parallel zur Längsachse L ausgerichtet sind. Die Auslassdüsen 54 blasen Temperiergas achsparallel zur Längsachse L nach oben aus und bilden somit einen weiteren um die Längsachse L umlaufenden Luftschleier aus. Sie können auch zusätzliche oder alternative an einer Unterseite des Luftverteilerrings 28 angeordnet sein und einen Luftschleier nach unten ausblasen.

Es ist auch denkbar, dass nur an den Anblaselementen 22 oder nur an dem Luftverteilerring 28 Auslassdüsen 53, 54 angeordnet sind. Ferner ist es auch möglich, dass zusätzlich oder alternativ ein separater Verteilerring vorgesehen ist, der mit Auslassdüsen zum Erzeugen eines oder mehrerer Luftschleier ausgebildet ist. Ferner können auch radial ausgerichtete Auslassdüsen vorhanden sein. Darüber hinaus könnte für die Ausbildung eines oder mehrerer Luftschleier eine vom Temperiergas gesonderte Versorgung mit Gas vorgesehen sein.

Die Anblasdüsen 52 und die Auslassdüsen 53, 54 können jede beliebige Form aufweisen, wie zum Beispiel in Form von Bohrungen oder Schlitzen. Zum Beispiel können die Anblaselemente 22 jeweils eine einzige Anblasdüse 52 und/oder je Richtung eine einzige Auslassdüse 53 aufweisen, die zumindest annähernd über die gesamte Länge des Anblaselements 22 verläuft. Es können auch mehrere schlitzförmige Anblasdüsen 52 oder Auslassdüsen 53 vorgesehen sein, die überlappend und/oder schräg zu einer Ebene senkrecht zur Längsachse L angeordnet sind.

### Bezugszeichenliste

- 1: Folienschlauch
- 2: Maschinenfundament
- 3: Extruder
- 4: Aufgabetrichter
- 5: Aufgabetrichter
- 6: Blaskopf
- 7: Ringdüse
- 8: Flachlegeeinheit
- 9: Abziehwerk
- 10: Kühlgasring
- 11: Gaszuleitung
- 12: Gebläse
- 13: Austrittsdüse
- 14: Einfriergrenze
- 15: Innenkühlturm
- 16: Gasabsaugrohr
- 17: Kalibrierkorb
- 18: Kalibrierelement
- 19: zentrale Öffnung des Kühlgasrings
- 20: Nachtemperiereinheit
- 21: Führungselement
- 22: Anblaselement
- 23: Absaugeinheit
- 24: Absaugelement
- 25: Leitblech
- 26: Gebläse
- 27: Zuführleitung
- 28: Luftverteilerring
- 29: Zuleitung
- 30: Luftkühler
- 31: Lufterhitzer
- 32: Absaugleitung
- 33: Steuerung
- 34: Steuerklappe
- 35: Temperatursensor in der Zuführleitung
- 36: Drucksensor im Luftverteilerring
- 37: Temperatursensor vor der Nachtemperiereinheit
- 38: Temperatursensor nach der Nachtemperiereinheit
- 39: in Abzugsrichtung strömender innerer Luftschleier
- 40: in Abzugsrichtung strömender äußerer Luftschleier
- 41: gegen die Abzugsrichtung strömender innerer Luftschleier
- 42: gegen die Abzugsrichtung strömender äußerer Luftschleier
- 43: radial strömender unterer Luftschleier
- 44: Rahmen
- 45: Verstelleinheit
- 46: Schwenkarm
- 47: Träger
- 48: Koppelstange
- 49: Mitnehmer
- 50: Führung
- 51: Platte
- 52: Anblasdüse
- 53: Auslassdüse
- 54: Auslassdüse

- D: Durchmesser der Durchgangsöffnung
- F: Durchmesser der Führungsöffnung
- K: Durchmesser der Kalibrieröffnung
- L: Längsachse

## Patentansprüche

1. Folienblasanlage umfassend:
einen Blaskopf (6) zum Ausstoßen eines Folienschlauchs (1) aus plastifiziertem thermoplastischem Kunststoff in einer Abzugsrichtung entlang einer Längsachse (L) der Folienblasanlage,
einen Kühlgasring (10) in Abzugsrichtung stromab des Blaskopfs (6), der eine zentrale Öffnung zum Hindurchführen des Folienschlauchs (1) bildet und der zumindest eine innenliegende Austrittsdüse (13) zum Anströmen des Folienschlauchs (1) mit Kühlgas aufweist,
einen Kalibrierkorb (17) stromab des Kühlgasrings (10) mit mehreren Kalibrierelementen (18), die dazu eingerichtet sind, den Folienschlauch (1) zu umschließen und eine Kalibrieröffnung zu bilden, um den Folienschlauch (1) zu führen, wobei die Kalibrierelemente (18) zum Einstellen eines Durchmessers (K) der Kalibrieröffnung verstellbar sind, und
eine Nachtemperiereinheit (20) stromab des Kalibrierkorbs (17) zum Nachtemperieren des Folienschlauchs (1),
**dadurch gekennzeichnet,**
**dass** die Nachtemperiereinheit (20) mehrere Führungselemente (21) aufweist, die dazu eingerichtet sind, den Folienschlauch (1) zu umschließen und eine Führungsöffnung zu bilden, um den Folienschlauch (1) zu führen, wobei die Nachtemperiereinheit (20) einen Rahmen (44) aufweist, an dem die Führungselemente (21) zum Einstellen eines Durchmessers (F) der Führungsöffnung verstellbar angelenkt sind, und
**dass** die Nachtemperiereinheit (20) mehrere Anblaselemente (22) zum Anblasen des Folienschlauchs (1) mit Temperiergas aufweist, die dazu eingerichtet sind, den Folienschlauch (1) zu umschließen und eine Durchführöffnung für den Folienschlauch (1) zu bilden, wobei die Anblaselemente (22) zum Einstellen eines Durchmessers (D) der Durchführöffnung verstellbar am Rahmen (44) angelenkt sind.

2. Folienblasanlage Anspruch 1,
**dadurch gekennzeichnet,**
**dass** die Nachtemperiereinheit (20) eine Kühleinheit (30) zum Kühlen des Temperiergases und/oder eine Heizeinheit (31) zum Heizen des Temperiergases aufweist.

3. Folienblasanlage Anspruch 1 oder 2,
**dadurch gekennzeichnet,**
**dass** die Anblaselemente (22) jeweils zumindest eine nach innen weisende Anblasdüse (52) zum Anblasen des Folienschlauchs (1) mit Temperiergas aufweisen.

4. Folienblasanlage nach Anspruch 3,
**dadurch gekennzeichnet,**
**dass** die Anblaselemente (22) oder ein Luftverteilerring (28), der radial außerhalb der Anblaselemente (22) angeordnet ist und diese mit Temperiergas versorgt, jeweils zumindest eine radial außerhalb der zumindest einen Anblasdüse (52) zumindest im Wesentlichen parallel zur Längsachse weisende Auslassdüse (53, 54) aufweisen, um einen um die Längsachse (L) ringförmig, achsparallel ausströmenden Luftschleier zu erzeugen.

5. Folienblasanlage nach einem der Ansprüche 1 bis 4,
**dadurch gekennzeichnet,**
**dass** die Anblaselemente (22) stromab der Führungselemente (21) angeordnet sind.

6. Folienblasanlage nach einem der Ansprüche 1 bis 5,
**dadurch gekennzeichnet,**
**dass** die Anblaselemente (22) und die Führungselemente (21) synchron einstellbar sind.

7. Folienblasanlage nach Anspruch 6,
**dadurch gekennzeichnet,**
**dass** die Nachtemperiereinheit (20) mehrere über den Umfang verteilt angeordnete Träger (47) aufweist, die verstellbar am Rahmen (44) angelenkt sind und
**dass** an den Trägern (47) jeweils zumindest eines der Anblaselemente (22) und zumindest eines der Führungselemente (21) befestigt ist.

8. Folienblasanlage nach einem der Ansprüche 1 bis 7,
**dadurch gekennzeichnet,**
**dass** der Durchmesser (F) der Führungsöffnung der Nachtemperiereinheit (20) kleiner ist als der Durchmesser (D) der Durchführöffnung der Nachtemperiereinheit (20).

9. Folienblasanlage nach einem der Ansprüche 1 bis 8,
**dadurch gekennzeichnet,**
**dass** die Folienblasanlage stromab der Nachtemperiereinheit (20) eine Flachlegeeinheit (8) zum Zusammenlegen des Folienschlauchs (1) umfasst und dass ein Bereich zwischen der Nachtemperiereinheit (20) und der Flachlegeeinheit (8) frei von den Folienschlauch (1) beeinflussenden Elementen ist.

10. Folienblasanlage nach einem der Ansprüche 1 bis 9,
**dadurch gekennzeichnet,**
**dass** stromab der Nachtemperiereinheit (20) ein ringförmige Leitblechanordnung (25), durch die der Folienschlauch (1) hindurchführbar ist, angeordnet ist.

11. Folienblasanlage nach einem der Ansprüche 1 bis 10,
**dadurch gekennzeichnet,**
**dass** die Nachtemperiereinheit (20) eine Absaugeinheit (23) zum zumindest teilweisen Absaugen des Temperiergases aufweist und
**dass** die Absaugeinheit (23) mit einer Zuführung für Temperiergas der Anblaselemente (22) strömungsverbunden ist.

12. Folienblasanlage nach einem der Ansprüche 1 bis 11,
**dadurch gekennzeichnet,**
**dass** stromauf der Anblaselemente (22) über den Umfang um die Längsachse (L) zumindest ein Temperatursensor (37) zum Erfassen der Temperatur des Folienschlauchs (1) angeordnet ist,
**dass** stromab der Anblaselemente (22) über den Umfang um die Längsachse (L) zumindest ein Temperatursensor (38) zum Erfassen der Temperatur des Folienschlauchs (1) angeordnet ist und
**dass** die Folienblasanlage einen Temperatursensor (35) zum Erfassen der Temperatur des Temperiergases umfasst.

13. Folienblasanlage nach einem der Ansprüche 1 bis 12,
**dadurch gekennzeichnet,**
**dass** die Folienblasanlage einen Drucksensor (36) zum Erfassen des Drucks oder einen Volumenstromsensor zum Erfassen des Volumenstroms des Temperiergases innerhalb eines Leitungssystems (27, 28) zur Versorgung der Anblaselemente (22) mit Temperiergas umfasst.

14. Verfahren zum Regeln einer Folienblasanlage nach einem der Ansprüche 1 bis 13,
**dadurch gekennzeichnet,**
**dass** der Folienschlauch (1) mit Temperiergas angeblasen wird und
**dass** die Temperatur des Folienschlauchs (1) stromab der Nachtemperiereinheit (20) zumindest bereichsweise über den Umfang auf eine Soll-Temperatur geregelt wird.

15. Verfahren nach Anspruch 14,
**dadurch gekennzeichnet,**
**dass** der Folienschlauch (1) stromab der Nachtemperiereinheit (20) zumindest bereichsweise über den Umfang mittels des Temperiergases gekühlt oder erhitzt wird.

16. Verfahren nach Anspruch 14 oder 15,
**dadurch gekennzeichnet,**
**dass** die Temperatur des Folienschlauchs (1) stromab der Nachtemperiereinheit (20), insbesondere in einem Bereich eines Auslaufs der Nachtemperiereinheit (20), aus dem der Folienschlauch (1) aus der Nachtemperiereinheit (20) austritt, gemessen wird und
**dass** eine Temperatur und/oder ein Volumenstrom des Temperiergases in Abhängigkeit der Differenz der gemessenen Temperatur des Folienschlauchs (1) und der Soll-Temperatur des Folienschlauchs (1) eingestellt wird.

17. Verfahren nach einem der Ansprüche 14 bis 16,
**dadurch gekennzeichnet,**
**dass** ein Temperaturprofil des Folienschlauchs (1) stromab der Nachtemperiereinheit (20), insbesondere in einem Bereich des Auslaufs der Nachtemperiereinheit (20), aus dem der Folienschlauch (1) aus der Nachtemperiereinheit (20) austritt, über den Umfang gemessen wird und
**dass** Temperaturen und/oder Volumenströme des Temperiergases der über den Umfang verteilt angeordneten Anblaselemente (22) jeweils in Abhängigkeit der Differenz der Temperatur im jeweiligen Umfangsbereich des Folienschlauchs (1) des jeweiligen Anblaselements (22) und der Soll-Temperatur im jeweiligen Umfangsbereich des Folienschlauchs (1) eingestellt werden.

18. Verfahren nach einem der Ansprüche 14 bis 17,
**dadurch gekennzeichnet,**
**dass** ein ringförmiger Luftschleier im Wesentlichen parallel zur Längsachse und um die Strömung des Temperiergases ausgeblasen wird.
